# EUROPÄISCHE PATENTSCHRIFT

(11) **EP 1 172 286 B1**
(45) Veröffentlichungstag und Bekanntmachung des Hinweises auf die Patenterteilung: **15.07.2009**
(21) Anmeldenummer: 01112103.5
(22) Anmeldetag: 17.05.2001
(51) Int. Cl.: B62D 55/065, B62D 61/10, B62D 49/06

(54) **Fahrzeug mit um mehrere Achsen schwenbare Radgruppen oder Raupen**
Vehicle with sets of wheels or tracks, that are pivotable around various axes
Véhicule avec ensembles de roues ou chenilles , qui pivotent autour de plusieurs axes

(30) Priorität: 11.07.2000 DE 10033261
(43) Veröffentlichungstag der Anmeldung: 16.01.2002
(73) Patentinhaber: MACMOTER S.p.A., I-47015 Modigliana (FO) (IT)
(72) Erfinder: Haringer, Alois, 39044 Neumark (BZ) (IT)
(74) Vertreter: Tergau & Pohl Patentanwälte

(56) Entgegenhaltungen:
- DE-A- 4 209 665
- DE-C- 758 398
- GB-A- 537 619
- US-A- 3 455 405
- US-A- 4 152 004
- US-A- 4 523 656

## Beschreibung

Die Erfindung bezieht sich auf ein Fahrzeug für landwirtschaftliche Zwecke und/oder für Bauzwecke, das mindestens je einen Fahrzeugrahmen, einen Antrieb sowie ein Fahrwerk umfasst, wobei das Fahrwerk beidseitig sowie in Laufrichtung hintereinander je zwei Radgruppen mit Radkästen für je zwei hintereinander angeordnete Räder mit Reifen und/oder Kettenrädern mit Raupen/Ketten umfasst, die lenkbar und als Radgruppen um die X-Achse/Längsachse des Fahrzeuges und um eine quer zur X-Achse/Längsachse angeordnete Y-Achse/Querachse schwenkbar sind.

Fahrzeuge der genannten Art sind bekannt. Der Erfindung liegt die Aufgabe zugrunde, Maßnahmen vorzusehen, um die Einsatzmöglichkeiten und insbesondere die Geländegängigkeit sowie die Brauchbarkeit und Verwendbarkeit sowohl als landwirtschaftliches Fahrzeug, zum Beispiel als Zugmaschine bzw. als Traktor und/oder für Sonderzwecke als auch zur Verwendung als Baufahrzeug gegenüber herkömmlichen Fahrzeugen dieser Art zu verbessern.

Die Aufgabe wird erfindungsgemäß gelöst, indem jeweils zwei Räder einer jeden Radgruppe an zugleich Antriebseinheiten aufweisenden Radkästen angeordnet sind und jede Radgruppe mit ihren Rädern und mit ihrem Radkasten jeweils um eine eigene, vertikal stehende Z-Achse schwenkbar sind.

Beim Stand der Technik werden zum Lenken eines Fahrzeuges jeweils gemeinsam ein rechtes Rad und ein linkes Rad eingeschlagen. Erfindungsgemäß sind sowohl rechts als auch links jeweils mindestens zwei Räder als Radgruppen bzw. als Tandem in Laufrichtung hintereinander angeordnet und werden gemeinsam gelenkt, wobei die Räder jeder Radgruppe jeweils um ihre eigenen Radachsen drehbar, zueinander jedoch starr angeordnet sind.

Weitere Merkmale der Erfindung gehen aus Unteransprüchen und der Beschreibung im Zusammenhang mit der Zeichnung hervor.

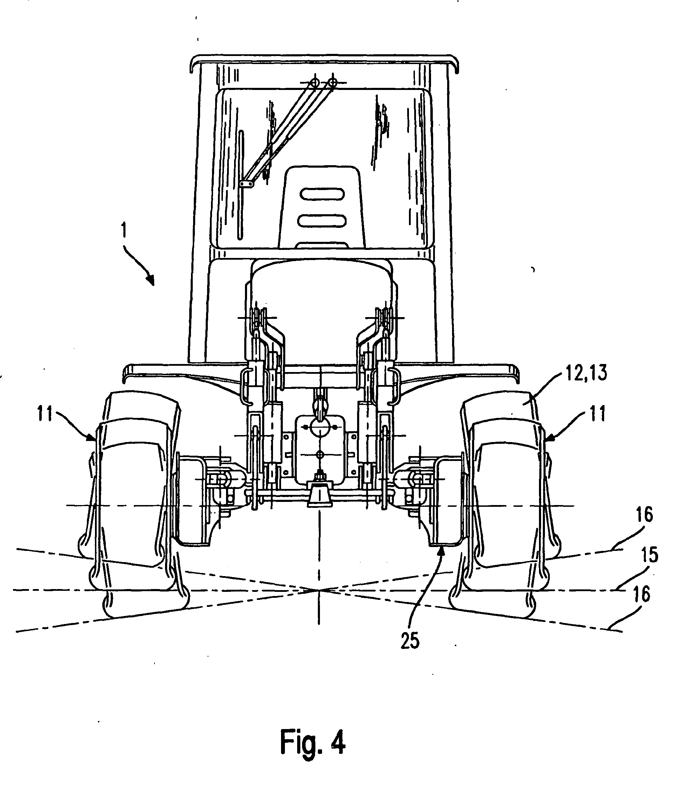

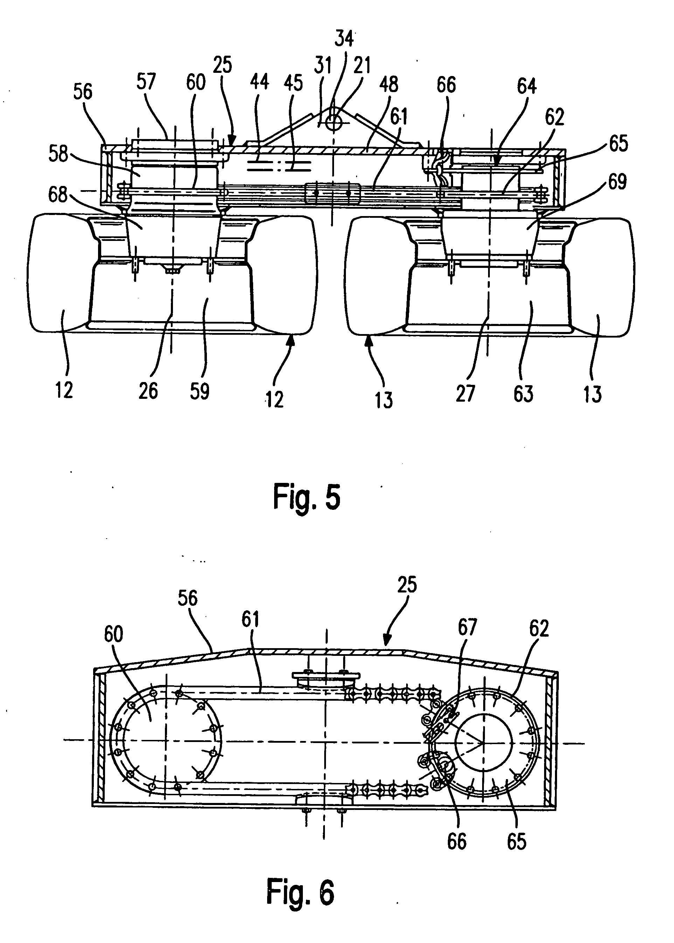

Die Erfindung wird nachstehend anhand von Ausführungsbeispielen, die in der Zeichnung dargestellt sind, näher beschrieben. Dabei zeigen:

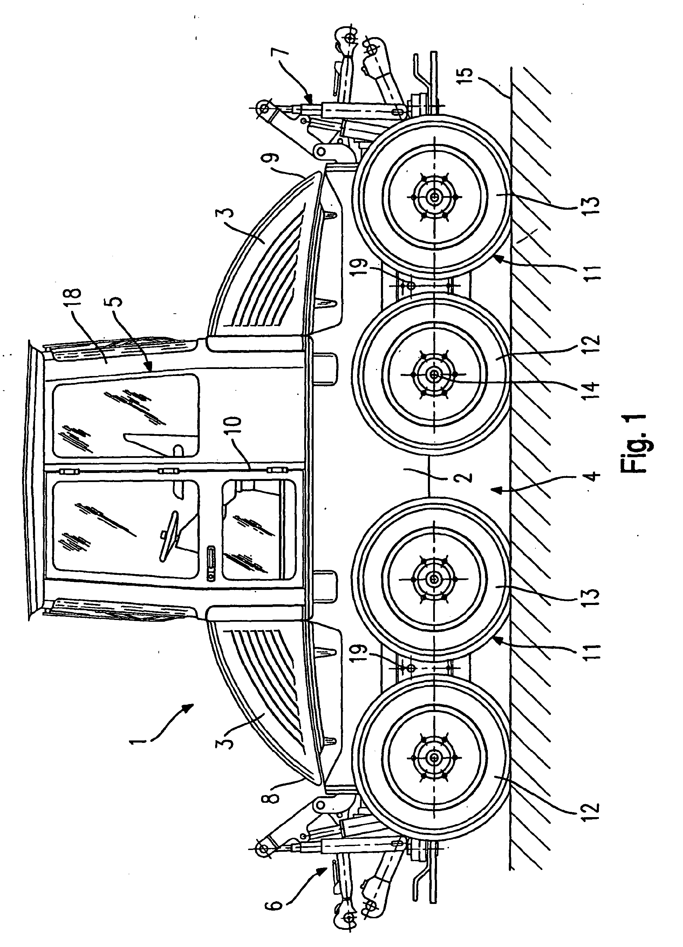

- Fig. 1: eine Seitenansicht des Fahrzeuges auf ebenem Untergrund;
- Fig.: 2: eine Seitenansicht des Fahrzeuges wie in Fig. 1 auf unebenem Untergrund;
- Fig.: 3: eine Draufsicht auf das Fahrzeug;
- Fig.: 4: eine Ansicht von hinten;
- Fig.: 5: zum Teil im Schnitt eine Ansicht von Teilen des An- triebes der Räder einer Radgruppe;
- Fig.: 6: eine Stirnansicht des Antriebes gemäß Fig. 5 ohne Räder;
- Fig.: 7: zum Teil im Schnitt eine Ansicht der gemeinsamen Lagerung zweier gegenüberliegender Radgruppen um eine Längsachse des Fahrzeugs;
- Fig.: 8 bis Fig.: 13: Ansichten wie in den Figuren 1 bis 6 von einem Rau- pen aufweisenden Fahrzeug;
- Fig.: 14: in Stirnansicht eine Darstellung einer Raupenanord- nung;
- Fig.:15 bis Fig.: 23: jeweils Ansichten in Draufsicht von verschiedenen Lenkstellungen der Räder des Fahrzeuges mit Rädern
- Fig.: 24 bis Fig.: 28: jeweils Ansichten in Draufsicht von verschiedenen Lenkstellungen der Raupen des Fahrzeuges mit Rau- pen

Ein als landwirtschaftliches und/oder als Baufahrzeug bzw. als Sonderfahrzeug verwendbares Fahrzeug 1 gemäß Fig. 1 umfaßt einen Fahrzeugrahmen 2, mindestens je einen Antrieb 3 sowie ein Fahrwerk 4 sowie weitere Aufbauten 5 und Halte- und/oder Hub- bzw. Zugelemente und/oder Arbeitsgeräte 6 bzw. 7 an einem oder beiden Enden 8 bzw. 9 des Fahrzeuges 1.

Vorzugsweise ist das Fahrzeug 1 gleichermaßen für Vorwärtsfahrt wie für Rückwärtsfahrt geeignet und weist alle dazu erforderlichen oder zweckmäßigerweise vorhandenen Komponenten in doppelter sowie zu einer Mittelebene 10 spiegelbildlich vorgesehenen Anordnung auf (Fig. 1). Gemäß dem in den Figuren dargestellten Ausführungsbeispiel weist das Fahrwerk 4 des Fahrzeuges 1 vier Radgruppen 11 mit jeweils zwei Rädern 12 und 13 auf, die in Laufrichtung hintereinander sowie jeweils um eigenen Achsen 14 drehbar gelagert sind. Auf jeder Seite des Fahrzeuges 1 befinden sich zwei Radgruppen 11 in Laufrichtung hintereinander.

Fig. 1 zeigt schließlich ein auf ebenen Untergrund 15 stehendes Fahrzeug 1, so daß sich die Räder 12 und 13 aller Radgruppen 11 auf ein und demselben Niveau befinden.

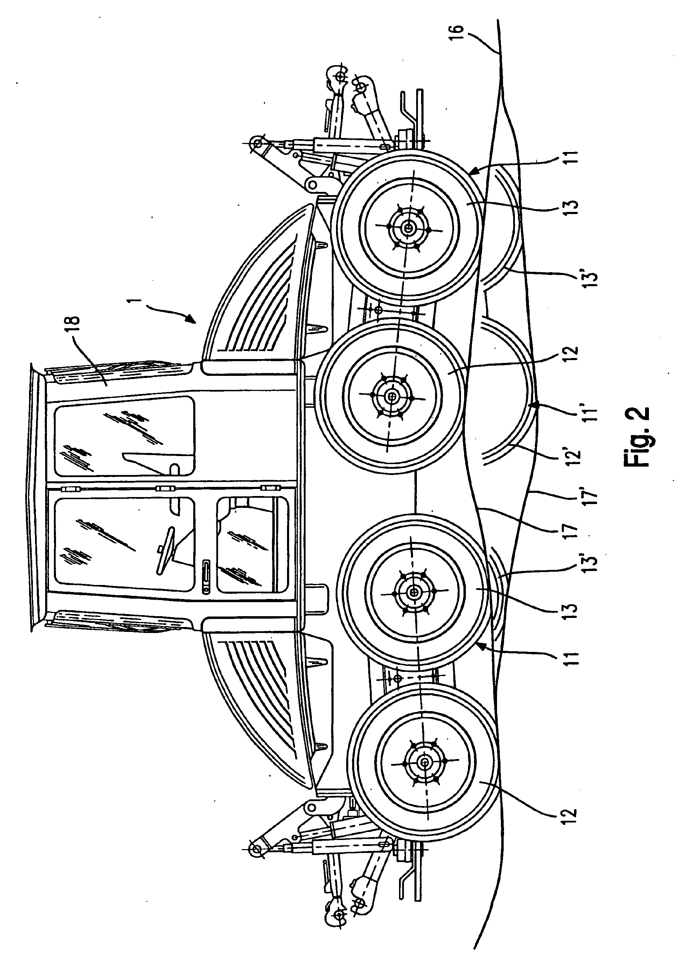

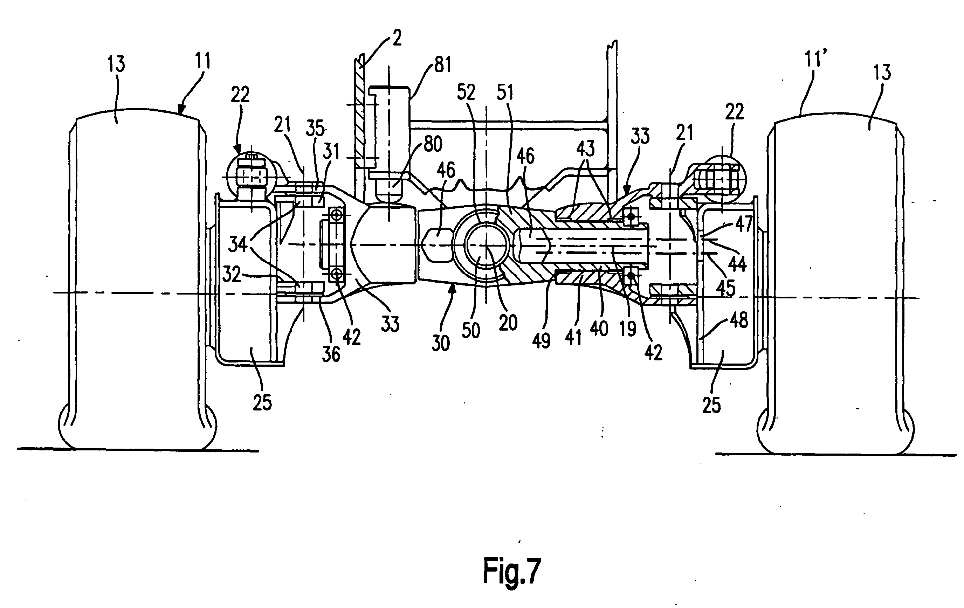

Gemäß der Darstellung in Fig. 2 ist der Untergrund 16 nicht eben. Die Räder 12 und 13 auf der einen Seite des Fahrzeuges 1 und die Räder 12' und 13' auf der anderen Seite des Fahrzeuges 1 nehmen eine Lage entsprechend der jeweiligen Kontur 17, 17' des nicht ebenen Untergrunds 16 ein. Das Fahrzeug 1 bzw. seine Führerkabine 18 bleiben dabei dennoch in einer annähernd waagerechten Lage, wie dies in Fig. 2 dargestellt ist. Um dies zu erreichen, sind jeweils die Radgruppen 11 auf der einen Seite des Fahrzeuges 1 und die Radgruppen 11' auf der anderen Seite des Fahrzeuges 1 jeweils als Einheit um eine Y-Achse 19 schwenkbar, bei der es sich jeweils um eine Querachse handelt, die senkrecht zu der in Fahrzeuglängsrichtung liegenden X-Achse 20 angeordnet ist (Fig. 7).

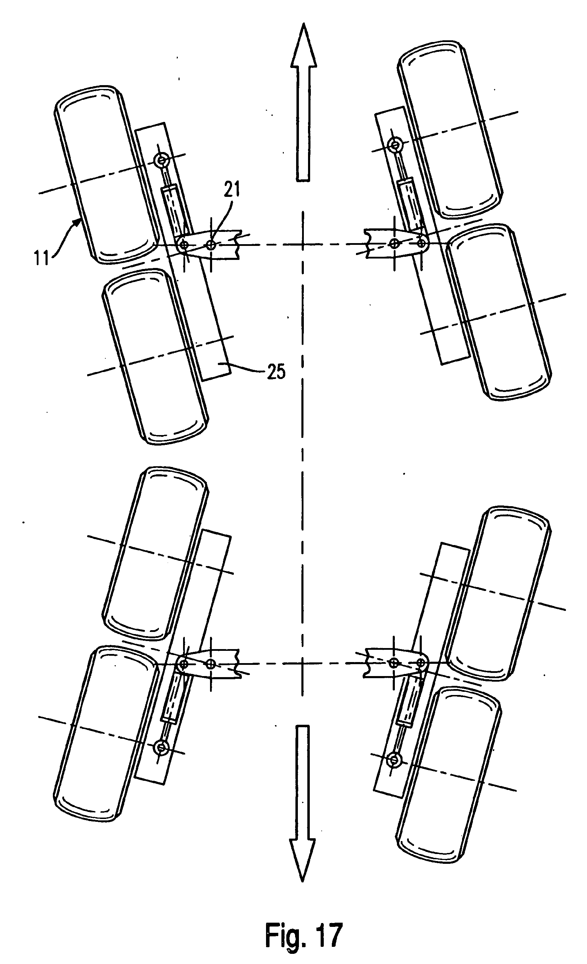

Ferner sind die Radgruppen 11 jeweils um eine Z-Achse 21 schwenkbar, um die die Radgruppen 11 beim Lenken verschwenken, wozu die Z-Achsen 21 sowohl senkrecht zu den Y-Achsen 19 als auch zu der X-Achse 21 (Fahrzeug - Längsachse) angeordnet sind. (Fig. 7 bzw. 17).

Gemäß Ausführungsbeispiel sind nur die Radgruppen 11 und 11' am einen Ende 9 des Fahrzeuges 1 sowohl um die Y-Achse 19 als auch um die Z-Achse 21 und um die X-Achse 20 verschwenkbar. Dies genügt, um einen hohen Grad an Geländegängigkeit zu erzielen.

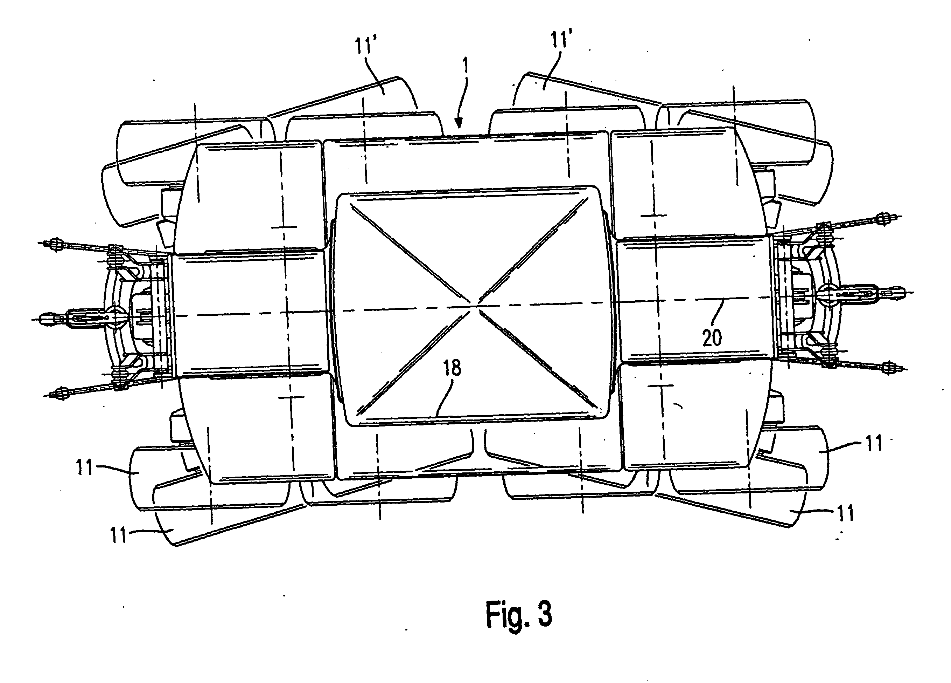

Die Lenkbarkeit der Radgruppen 11 ist grundsätzlich aus der Draufsicht gemäß Fig. 3 ersichtlich. Die Radgruppen 11 können in Geradeausfahrt stehen oder für Kurvenfahrt eingeschlagen sein, wobei die jeweils in Fahrtrichtung vorderen und hinteren Radgruppen 11 auf beiden Fahrzeugseiten in ihrer Gesamtheit verstellt werden können.

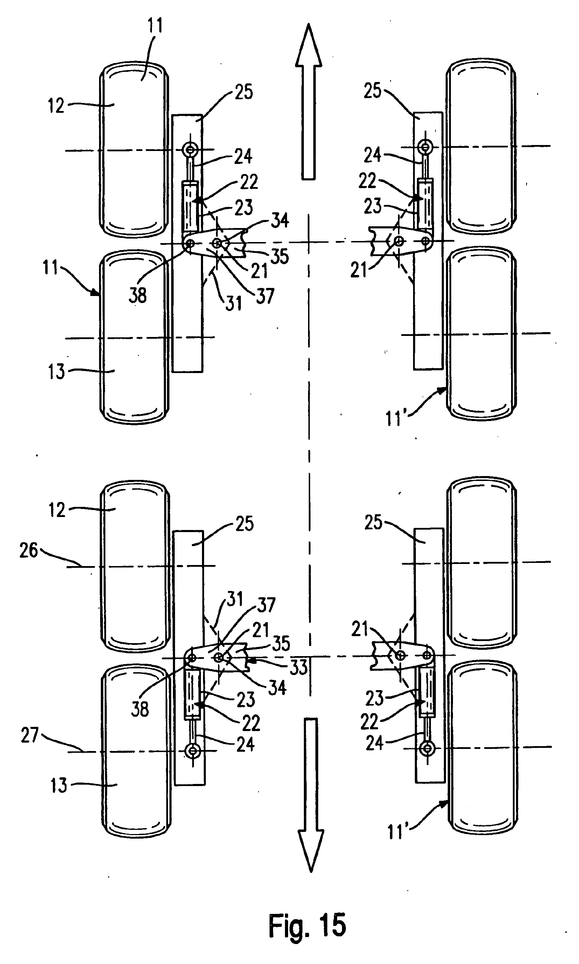

Die Verstellung der Radgruppen 11 und 11' zum Lenken erfolgt um die Z-Achsen 21 mit Hilfe von hydraulischen Einrichtungen 22, wie dies aus den Figuren 7 und 15 usw. ersichtlich ist. Jede hydraulische Einrichtung 22 umfaßt einen Zylinder 23 und einen Kolben 24. Gemäß dem in den Figuren dargestellten Ausführungsbeispiel sind die Kolben 24 mit ihren freien Enden jeweils an einem Radkasten 25 angelenkt, der sowohl wesentliche Komponenten des Antriebes für die Räder 12 und 13 des Räder aufweisenden Fahrzeuges 1 als auch zur Lagerung der Räder 12 und 13 dienende Elemente enthält. Die Räder 12 und 13 sind im Radkasten 25 um Achsen 26 und 27 frei drehbar gelagert und gemeinsam sowie mit dem Radkasten 25 um die Z-Achse 21 relativ zum Fahrzeugrahmen 2 verschwenkbar. Die Z-Achse 21 liegt außerhalb des Radkastens 25 zum Fahrzeugrahmen 2 hin versetzt, wie dies aus den Figuren 7 und 15 hervorgeht.

Zur Befestigung und schwenkbaren Lagerung am Fahrzeugrahmen 2 unmittelbar oder an einen Träger 30 (Fig. 7) weisen die Radkästen 25 jeweils eine obere Lagerlasche 31 und im Abstand darunter eine untere Lagerlasche 32 auf. Den beiden Lagerlaschen 31 und 32 sind die Schenkel einer Gabel 33 zugeordnet. Sowohl die Lagerlaschen 31 und 32 als auch die Schenkel der Gabel 33 weisen Lageröffnungen 34 auf, die konzentrisch zur Z-Achse 21 angeordnet sind. Ein in Fig. 7 nicht dargestellter Lagerbolzen durchgreift die Lageröffnungen 34 und ist in geeigneter Weise gesichert, so daß der Radkasten 25 mit seinen Rädern 12 und 13 um die Z-Achse 21 zum Lenken nach rechts und links geschwenkt werden kann.

Der jeweils obere Schenkel 35 der Gabel 33 ist länger als der untere Schenkel 36 und übergreift mit seinem freien Ende 37 nach Art einer Lasche den Radkasten 25, wie dies in Fig. 15 dargestellt ist. An diesem freien Ende 37 ist jeweils der Zylinder 23 der zum Lenken dienenden hydraulischen Einrichtung 22 angelenkt und um eine Achse 38 schwenkbar gelagert. Die Achse 38 steht parallel zu der jeweiligen Z-Achse 21 bzw. zu dem in dieser Achse liegenden, in Fig. 7 nicht dargestellten Lagerbolzen.

Sobald sich der Kolben 24 im Zylinder 23 der hydraulischen Einrichtung 22 bewegt, verändert sich die Lage des Radkastens 25 und mit ihm die Lage der Räder 12, 13 relativ zum Fahrzeugrahmen 2, so daß die Räder 12, 13 nach rechts oder links einschlagen bzw. in Geradeausfahrt stehen.

Grundsätzlich können - entgegen der Darstellung in Fig. 7 - die freien Enden der beiden Schenkel 35 und 36 der Gabel 33 auch jeweils U-förmig sein, so daß jede der beiden Lagerlaschen 31 und 32 des Radkastens 25 zwischen zwei zur Gabel 33 gehörenden Schenkeln liegt.

Alle Gabeln 33 und mit ihnen die Radkästen 25 und die Räder 12 und 13 bzw. die Radgruppen 11 sind jeweils um die Y-Achsen 19 schwenkbar am Fahrzeugrahmen 2 angeordnet.

Zum Verschwenken der die Radkästen 25 und Räder 12, 13 tragenden Gabeln 33 um die Y-Achse 19 sind Lagerbolzen 40 vorgesehen und erstrecken sich vom Fahrzeugrahmen 2 in Richtung Radkasten 25.

Jede Gabel 33 ist jeweils mit einer Lagerschale 41 auf einem Lagerbolzen 40 schwenkbar angeordnet. Zur Sicherung der Gabel 33 kann ein Haltering 42 am freien Ende des Lagerbolzens 40 und zur Lagerung können beispielsweise zwei Gleitlager 43 vorgesehen sein.

Der Lagerbolzen 40 ist zweckmäßigerweise zumindest über einen Teil seiner Länge rohrförmig. Somit kann eine Energieversorgungsleitung 44 und die entsprechende Rückleitung 45 vom Motor oder Antrieb 3 des Fahrzeugs und von einem zum Beispiel dort befindlichen Druckerzeuger durch den Lagerbolzen 40 in das Innere des Radkastens 25 und zu einem dort befindlichen hydraulischen Antrieb oder zu einen dort befindlichen Elektromotor (falls der Fahrzeugmotor einen Generator antreibt) führen. Dazu weisen sowohl die Lagerbolzen 40 jeweils seitliche Durchtrittsöffnungen 46 als auch jeder Radkasten 25 mindestens eine Durchtrittsöffnung 47 in einer den Rädern 12 bzw. 13 abgewandten Wand 48 auf.

Vorzugsweise ist am einen Fahrzeugende auf jeder Seite jeweils ein Lagerbolzen 40 für einen Radkasten 25 und seine Räder 12 und 13 starr mit dem Fahrzeugrahmen 2 verbunden.

Am anderen Fahrzeugende sind die auf den gegenüberliegenden Seiten des Fahrzeuges 1 befindlichen Radkästen 25 mit ihren Rädern 12 und 13 gemäß Fig. 7 nicht nur um die Y-Achsen 19 auf den Lagerbolzen 40 um zum Beispiel 5 bis 7 Grad schwenkbar gelagert, sondern zusätzlich sind diese Lagerbolzen 40 auch um die X-Achse 20 schwenkbar, die in der Längsachse des Fahrzeuges 1 liegt. Dazu sind die Lagerbolzen 40 an dem Träger 30 angeordnet, der um einen Lagerbolzen 50 schwenkbar am Fahrzeugrahmen gelagert ist, wobei seine Achse mit der Achse 20 zusammenfällt und die Achsen der Lagerbolzen 40 rechtwinklig schneidet (Fig. 7).

Die Lagerschalen 41 sind zweckmäßigerweise geteilt und bestehen somit aus zwei die Lagerbolzen 40 jeweils umgreifenden Halbschalen. Die beiden Halbschalen sind jeweils in der Einbauposition miteinander verschraubt.

Radialkräfte werden von den Lagerschalen 41 über die Gleitlager 43 auf die Lagerbolzen 40 übertragen. Die Axialkräfte werden von den zweckmäßigerweise geteilten Halteringen 42 am freien Ende der Lagerbolzen 40 bzw. von axialen Anschlagflächen 49 aufgenommen, die bei dem in Fig. 7 dargestellten Träger 30 am Übergang von den jeweiligen Lagerbolzen 40 zu einem Mittelstück 51 des Trägers 30 vorgesehen sind. Das Mittelstück 51 weist eine Bohrung 52 auf und ist in geeigneter, hier nicht näher interessierender Weise auf dem Lagerbolzen 50 zum Beispiel um 5 Grad bis 7 Grad schwenkbar gelagert. Die Lagerbolzen 40 sind am Träger 30 symmetrisch angeordnet.

Weitere Einzelheiten des Radkastens 25 und der in ihm befindlichen Komponenten sind in den Figuren 5 und 6 dargestellt.

Der Radkasten 25 umfaßt ein längliches Gehäuse 56, in dem die beiden Reifen tragenden Räder 12 und 13 in grundsätzlich bekannter und hier nicht näher interessierender Weise gelagert sind. Ferner befinden sich in jedem Radkasten 25 ein hydraulischer Antrieb 57 und ein Planetengetriebe 58 zum Antrieb der Felge 59 des ersten, einen Reifen aufweisenden Rades 12. Um beide Räder 12 und 13 gleichzeitig anzutreiben, wirkt das Planetengetriebe 58 ferner auf ein Kettenrad 60 und überträgt die Antriebsleistung über eine Kette 61 auf ein zweites Kettenrad 62, das drehfest mit der Felge 63 des zweiten Rades 13 der Tandem-Radanordnung verbunden ist.

Ferner befindet sich eine Bremse 64 im Radkasten 25. Sie umfaßt eine Bremsscheibe 65 für eine hydraulische Bremse bzw. für Bremsbacken 66. Auch eine mechanisch wirkende Handbremse 67 kann an der Bremsscheibe 65 angreifen.

Anstelle des hydraulischen Antriebes 57, der über die Energieversorgungsleitung 44 mit Energie versorgt wird, kann auch ein Elektromotor vorgesehen sein.

Grundsätzlich sind der Antrieb 57 mit dem Kettenrad 60 dem einen Rad 12 und die Bremseinrichtung mit der hydraulischen Bremse 66 und der Handbremse 67 dem anderen Rad 13 zugeordnet.

Durch den Kettenantrieb ist sichergestellt, daß beide Räder jeweils stehen oder synchron drehen.

Die Lagerung der Radnaben 68 und 69, an denen die Felgen 59 und 63 befestigt sind, ist im Einzelnen nicht dargestellt, da es sich hier um grundsätzlich bekannte Merkmale handelt.

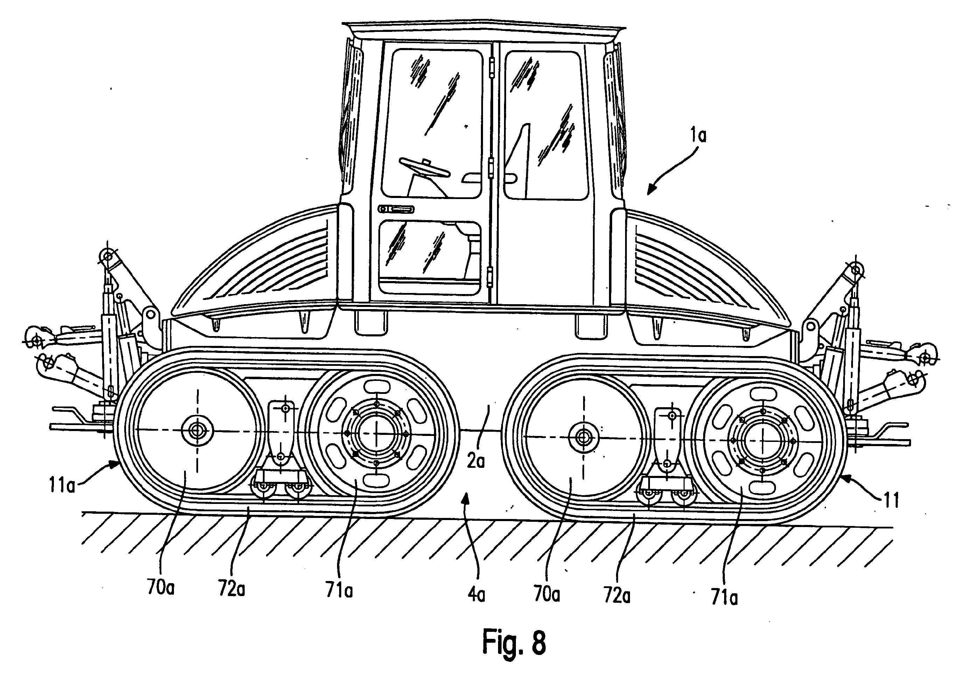

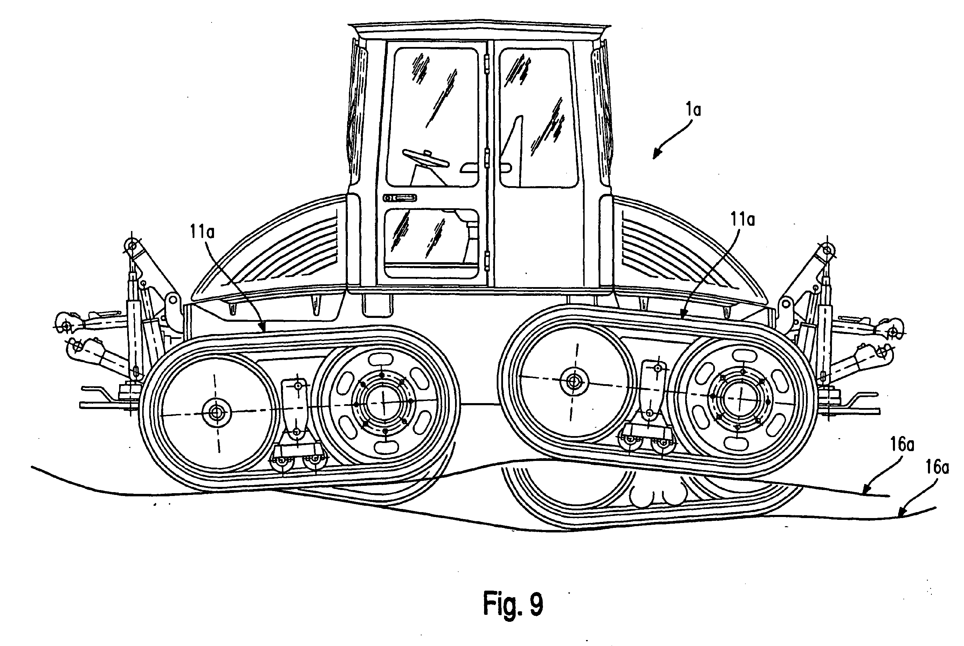

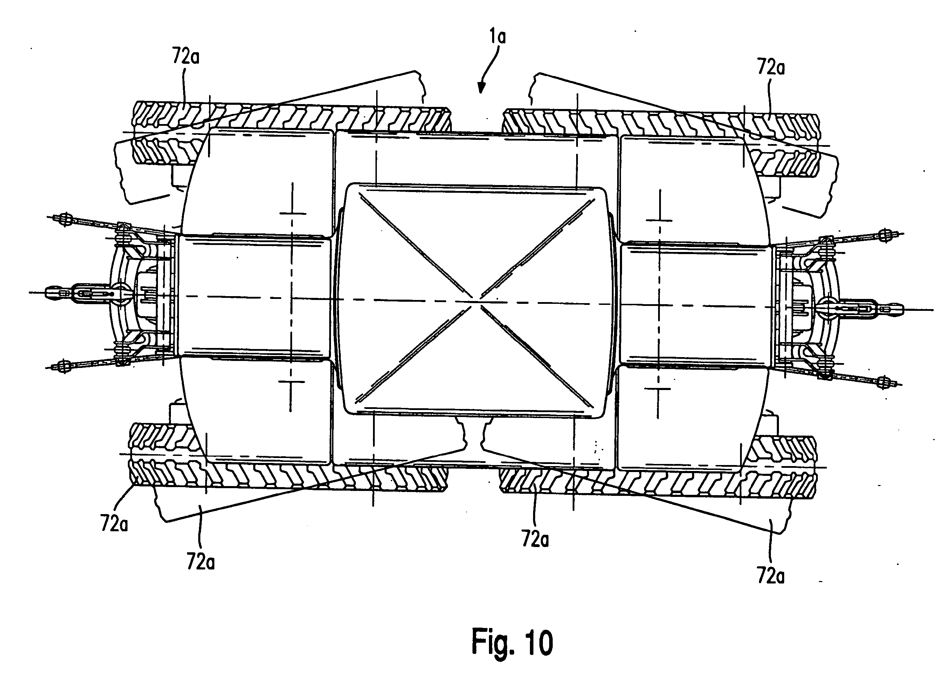

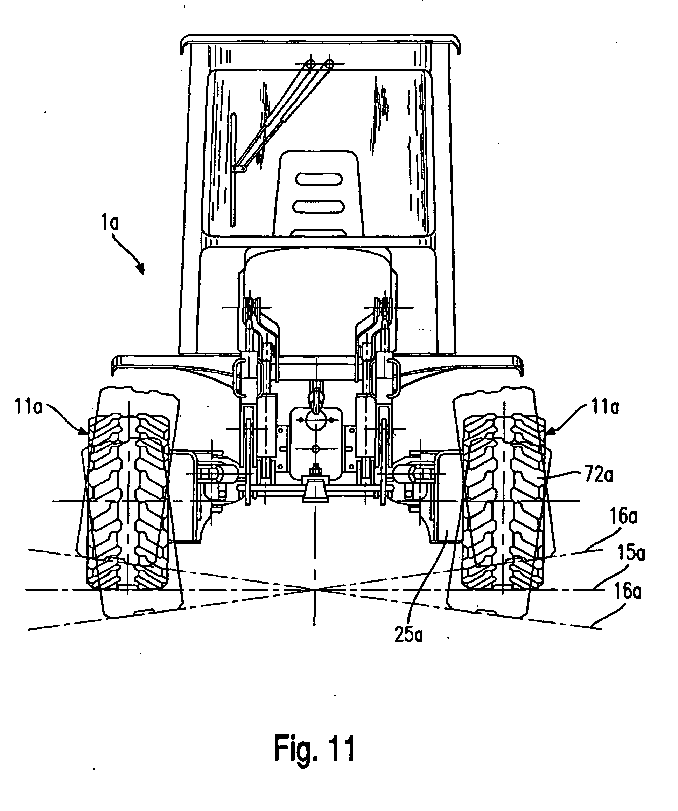

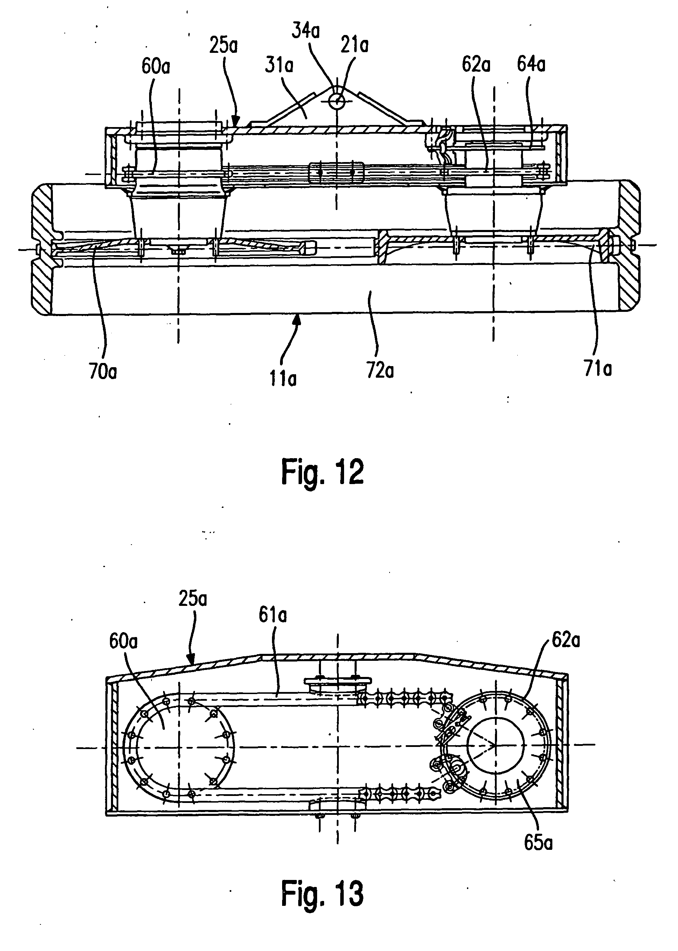

Anstelle der Felgen 59 und 63 können auf den Radnaben 68 und 69 auch Kettenräder 70a und 71a für Raupen 72a oder Ketten eines Raupen- oder Kettenfahrzeuges 1a gemäß den Figuren 8 bis 14 vorgesehen sein. Grundsätzlich gleiche Teile weisen bei diesem Ausführungsbeispiel dieselben Bezugszahlen und zusätzlich den Buchstabenindex a auf.

Anstelle von vier Radgruppen 11 mit acht Reifen tragenden Rädern 12, 13 weist das Fahrzeug 1a acht Kettenräder 70a und 71a für vier Ketten bzw. Raupen 72a auf. Die beiden, je angetriebenen Kettenräder 70a und 71a bilden zusammen mit einer Raupe oder Kette 72 jeweils eine Radgruppe 11a wie im Falle der Reifen tragenden Räder 12 und 13. Die Lenkung und der Antrieb sind jeweils identisch. Die Radkästen 25 und 25a der beiden Fahrzeuge 1 und 1a sowie die in den Radkästen 25 und 25a befindlichen Komponenten sind daher ebenfalls übereinstimmend gleich, wie dies auch aus einem Vergleich der Figuren 5 und 6 mit den Figuren 12 und 13 hervorgeht.

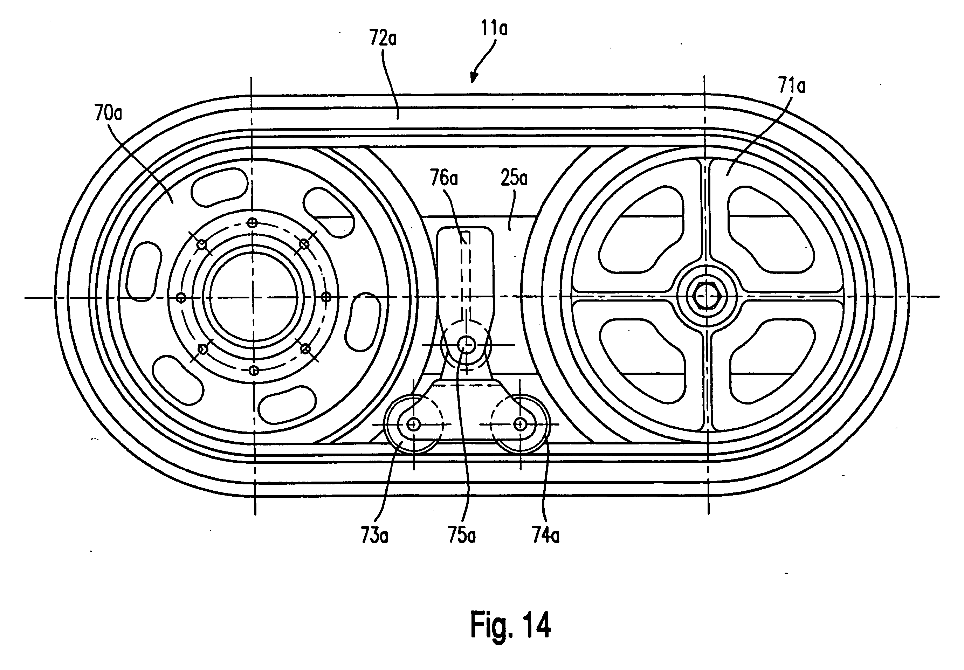

Eine Einzelheit der eine Kette oder Raupe 72a tragenden Radgruppe 11a mit Kettenrädern 70a und 71a ist in Fig. 14 dargestellt. Sie umfaßt Hilfsrollen 73a und 74a, die am Radkasten 25a um eine Achse 75a verschwenkbar sowie gegebenenfalls in der Höhe längs eines Langloches 76a verstellbar befestigbar sind. Die Lagerachsen der beiden außerhalb der Spur der Kettenräder 70a und 71a auf der Raupe oder Kette 72a abrollenden Hilfsrollen 73a und 74a bilden ein etwa gleichseitiges Dreieck, wie dies aus Fig. 14 hervorgeht.

Alle Radgruppen 11 bzw. 11a mit jeweils zwei Reifen aufweisenden Rädern 12 und 13 oder mit jeweils Raupen oder Ketten 72a tragenden Kettenrädern 70a und 71a sind angetrieben und lenkbar, wie dies in den Figuren 15 bis 28 dargestellt ist.

Die Stellung der Radgruppen 11 zur Geradeausfahrt ist in Fig. 15 dargestellt. Das Fahrzeug 1 bzw. 1a ist darüberhinaus vorzugsweise in der Lage, in der Richtung nach vorne und nach hinten gleichermaßen zu fahren, wie dies aus den Pfeilen in den Fig. 15 bis 28 hervorgeht.

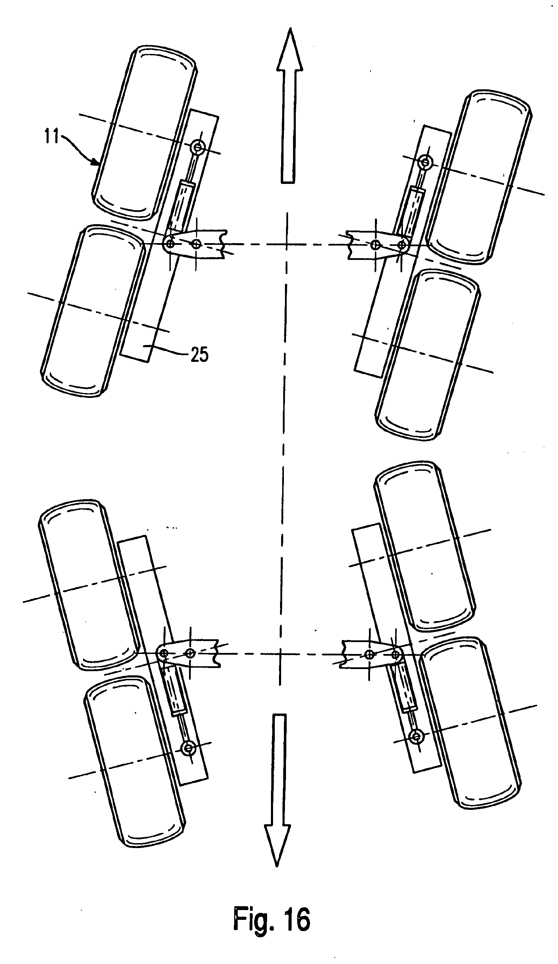

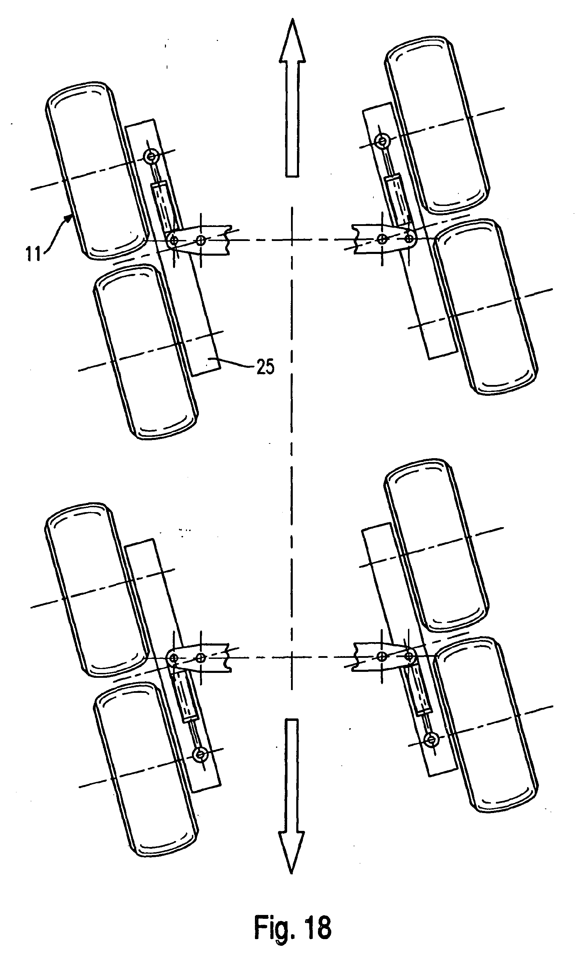

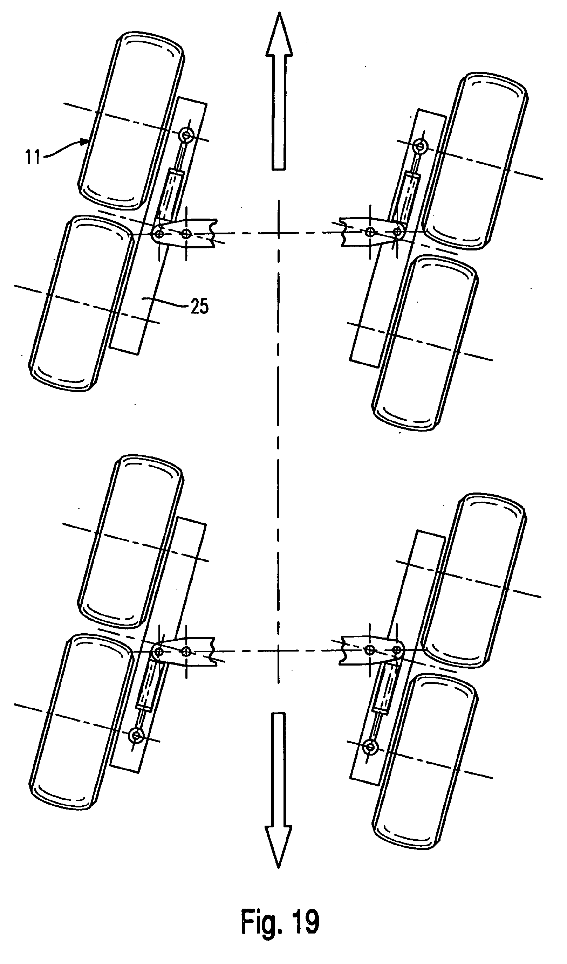

Für eine enge Kurvenfahrt in Fahrtrichtung nach rechts vorne oder nach links hinten sind die Radgruppen 11 an den beiden Enden des Fahrzeuges 1a entsprechend entgegengesetzt einschlagbar (Fig. 16). Zur engen Kurvenfahrt in der anderen Richtung sind die Radgruppen 11 am einen Ende nach links und am anderen Ende nach rechts einschlagbar (Fig. 17).
Zur Schrägfahrt nach links oder rechts sind die Radgruppen 11 an den beiden Fahrzeugenden parallel zueinander gemeinsam nach links (Fig. 18) oder nach rechts (Fig. 19) einschlagbar.

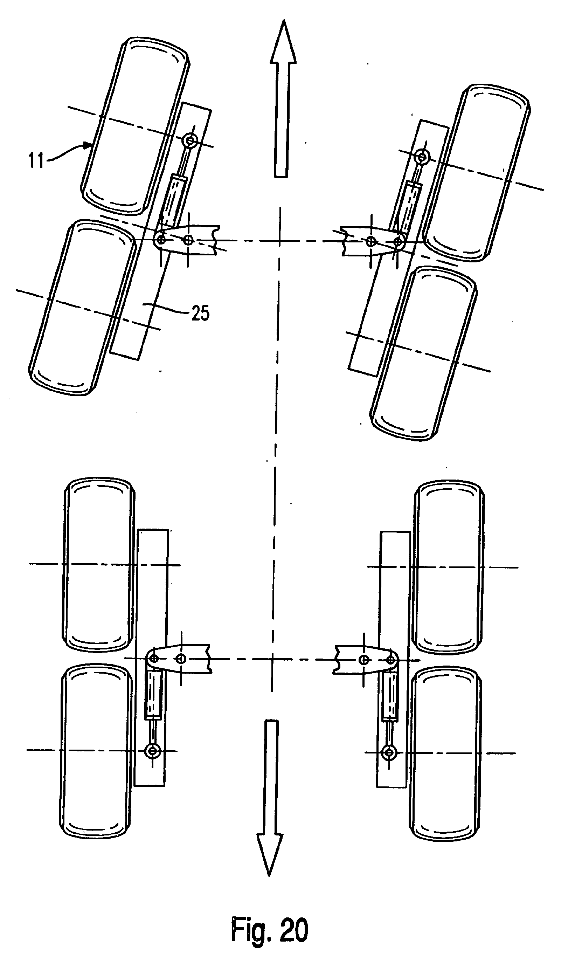

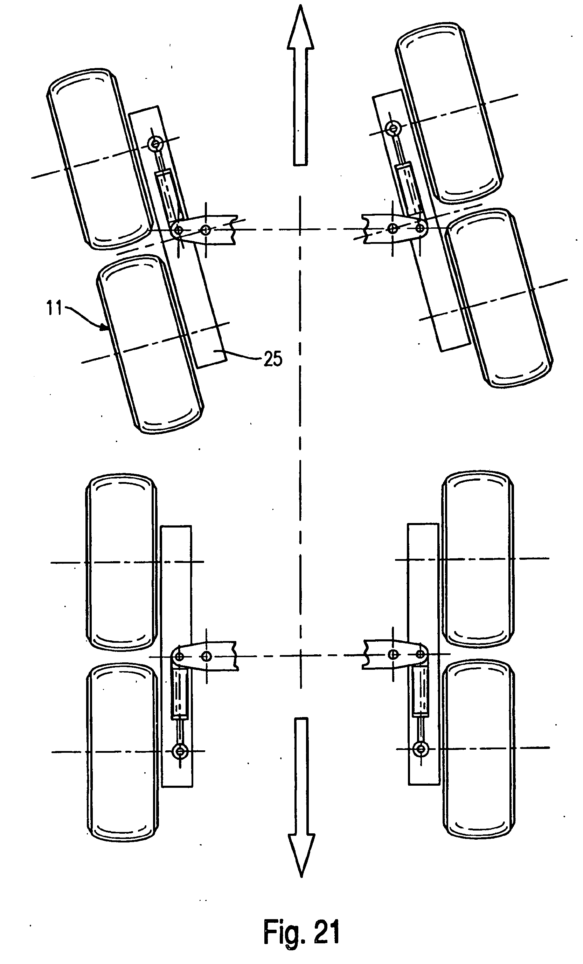

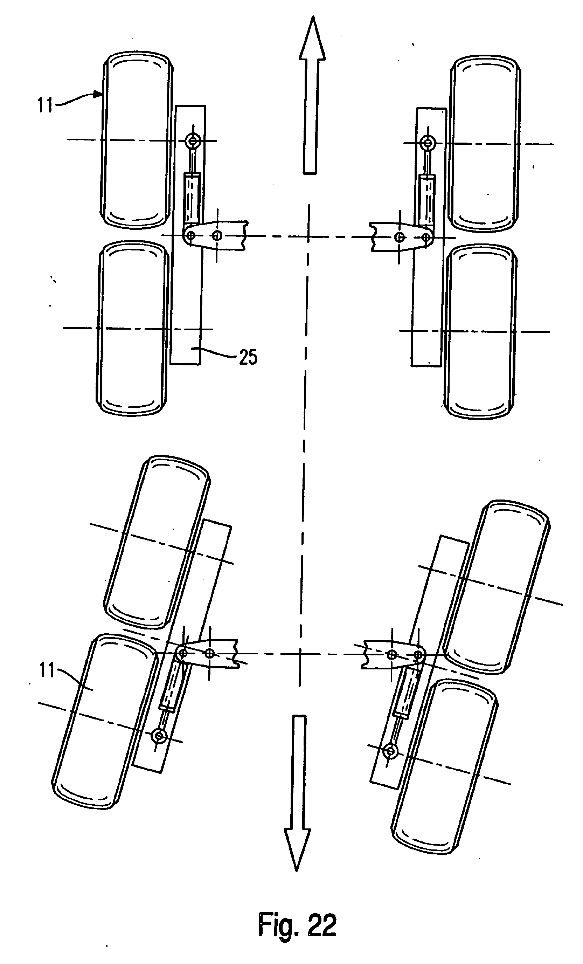

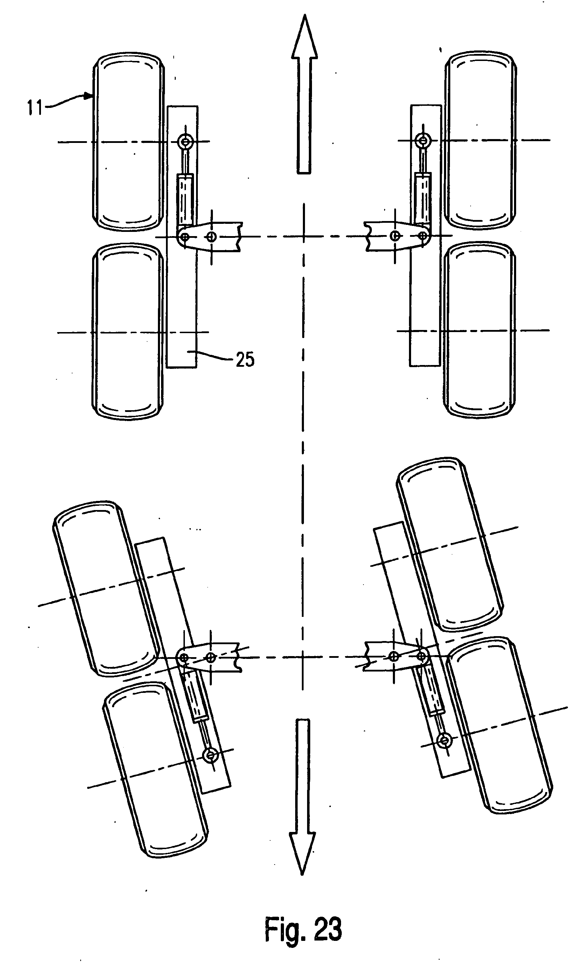

Für eine große Kurvenfahrt sind die Radgruppen 11 über die Radkästen 25 am einen Ende des Fahrzeuges 1 nach rechts (Fig. 20) oder nach links (Fig. 21) und am anderen Ende jeweils nicht einschlagbar. Zur Kurvenfahrt in der anderen Richtung oder falls nur die hinteren Radgruppen 11 gelenkt werden sollen, sind die Radgruppen 11 am einen Ende in Geradeausfahrt gerichtet und am anderen Ende des Fahrzeuges nach rechts oder links schräg gestellt, wie dies aus den Figuren 22 und 23 hervorgeht.

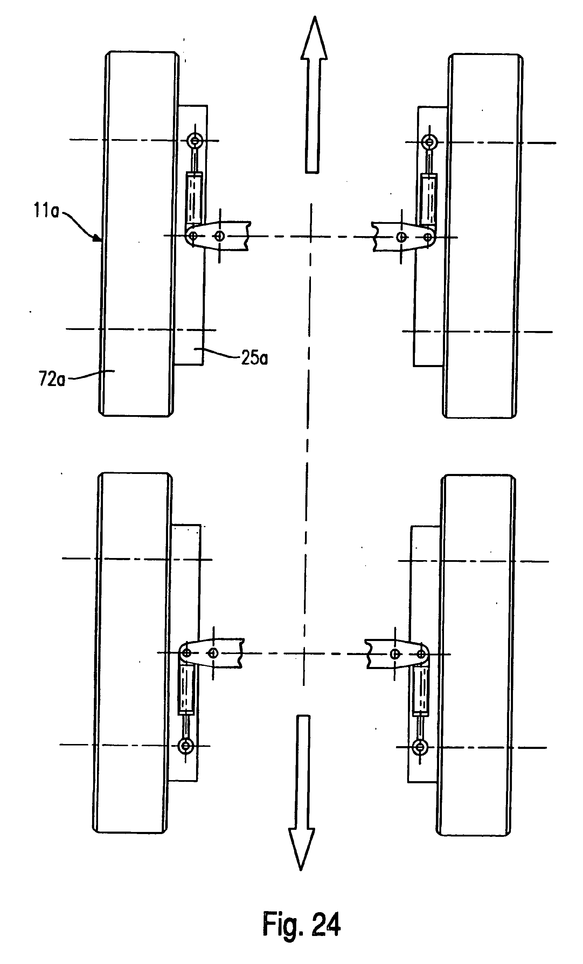

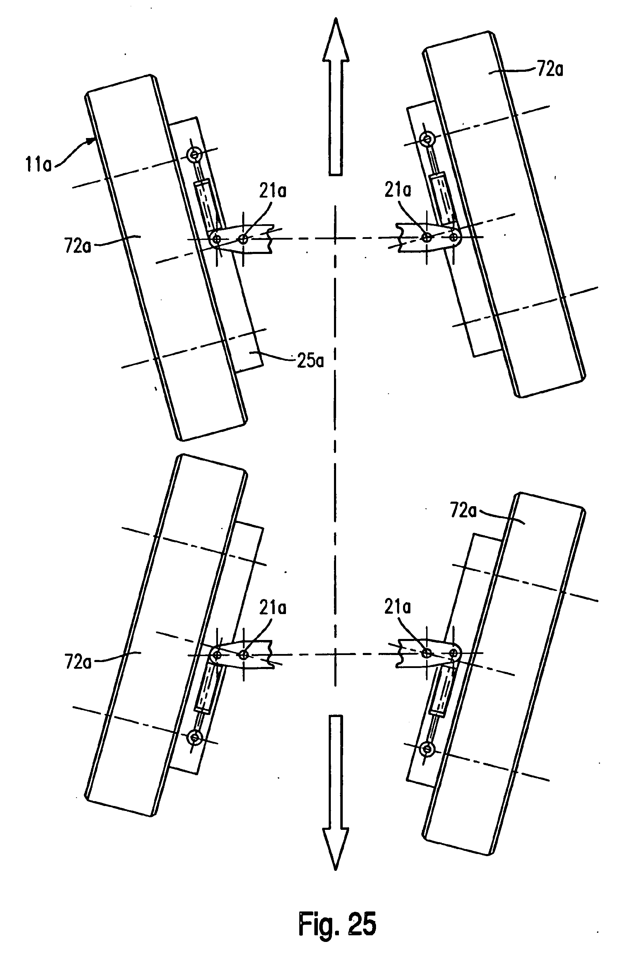

Grundsätzlich Gleiches gilt für die Stellung der Radgruppen 11a und ihrer Radkästen 25a bei dem Fahrzeug 1a mit Kettenrädern 70a und 71a sowie mit Raupen 72a. Fig. 24 zeigt die Geradeausfahrt und Fig. 25 zeigt die enge Kurvenfahrt nach vorne links oder nach hinten rechts mit vier um die vertikalen Achsen 21a schwenkbaren Raupen 72a. Es versteht sich, daß die Raupen 72a aufweisenden Radgruppen 11a in gleicher Weise entgegengesetzt für enge Kurvenfahrt einschlagbar bzw. schwenkbar sind.

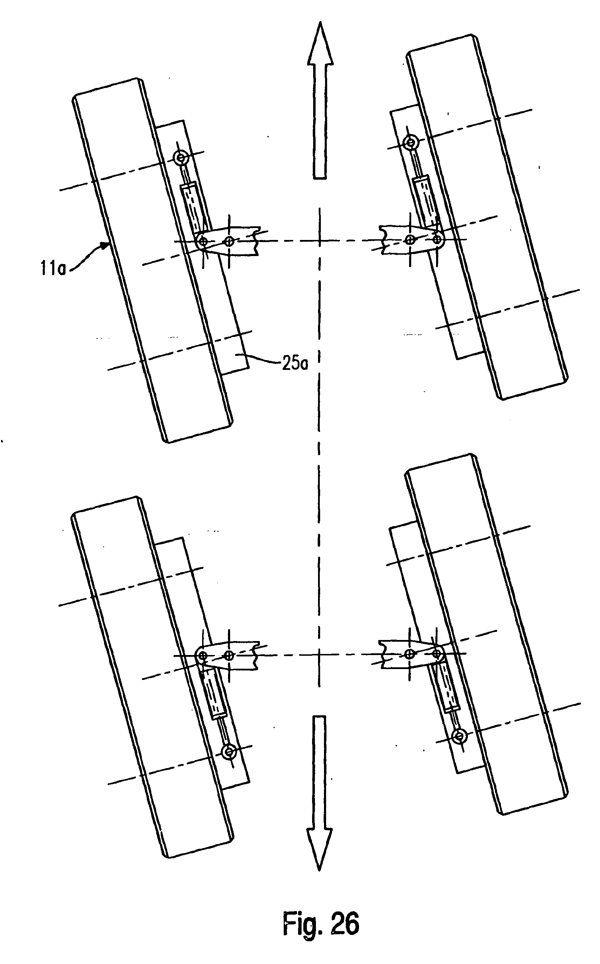

Zur Schrägfahrt sind die Radgruppen 11a in eine zum Fahrzeug schräge, zueinander parallele Lage gemäß Fig. 26 verschwenkbar bzw. einschlagbar.

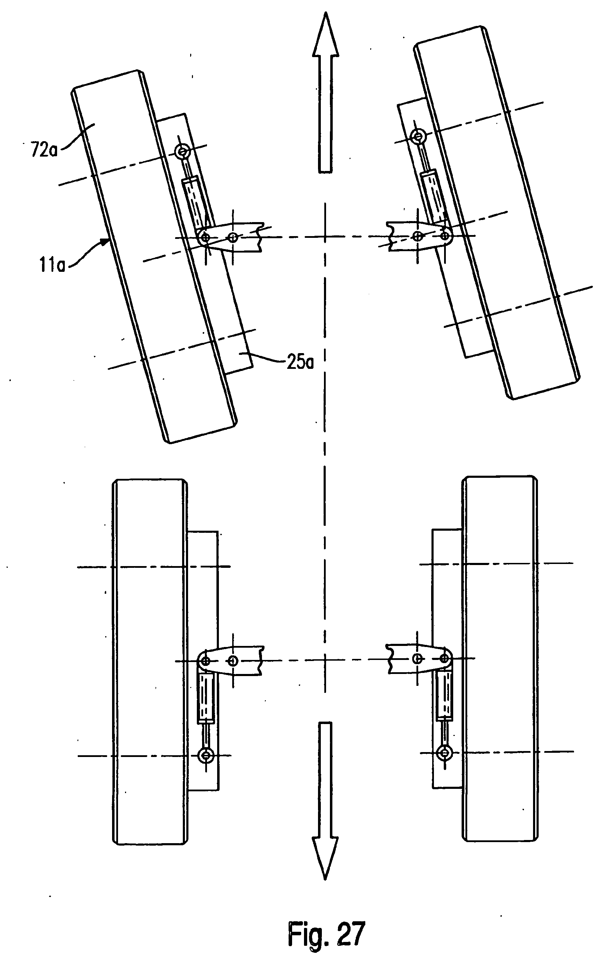

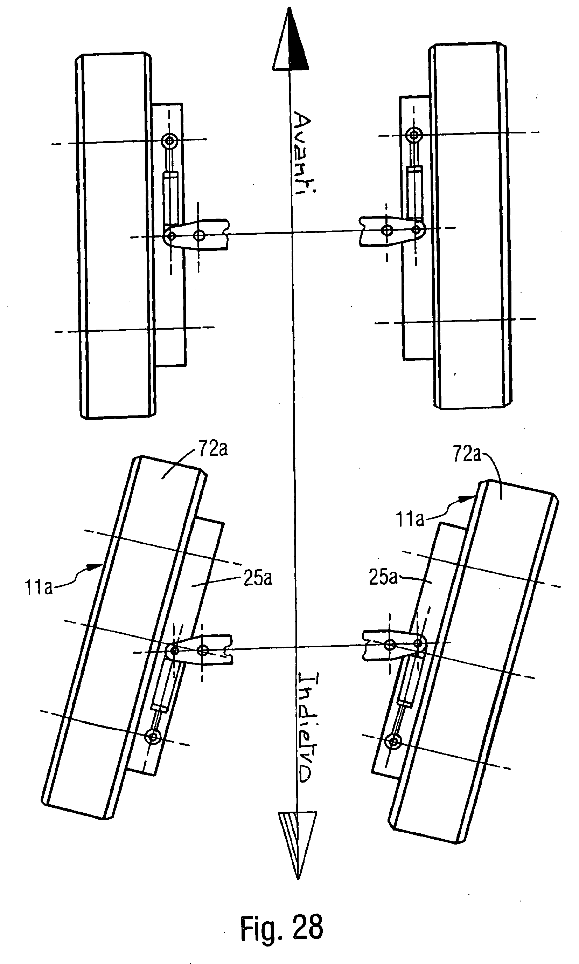

Für kleine Kurvenfahrt sind die Raupen 72a aufweisenden Radgruppen 11a am einen Fahrzeugende nach rechts oder links gemäß Fig. 27 einschlagbar und am anderen Fahrzeugende in Geradeausfahrt gestellt, während bei Fahrt in der anderen Richtung oder falls mit den hinteren Radgruppen 11a gelenkt wird, sind die am anderen Fahrzeugende befindlichen, Raupen bzw. Ketten 72a aufweisenden Radgruppen 11a zusammen mit ihren Radkästen 25a verschwenkbar bzw. einschlagbar (Fig. 28).

Es versteht sich, daß die Raupen bzw. Ketten 72a aufweisenden Radgruppen 11a ebenso eingeschlagen bzw. gesteuert werden können, wie dies für die Räder 12 und 13 aufweisenden Radgruppen 11 gilt. Hinzu kommt die Verschwenkbarkeit aller Radgruppen um die quer zur Fahrzeuglängsachse liegenden Y-Achsen 19 an beiden Fahrzeugenden und zusätzlich die Verschwenkbarkeit der Radgruppen 11 bzw. 11a am einen Ende des Fahrzeuges um die in Längsrichtung des Fahrzeuges liegende X-Achse 20 (Fig. 7).

Die Verstellung der Radgruppen 11 mit Reifen tragenden Rädern 12, 13 bzw. der Raupen 72a aufweisenden Radgruppen 11a beim Lenken erfolgt mit Hilfe der hydraulischen, Kolben 24 und Zylinder 23 aufweisenden Einrichtungen 22, während die Verstellung der Radgruppen 11 und 11a um jeweils etwa 5 bis 7 Grad um die Achsen 19 und 20 jeweils selbsttätig erfolgt.

Eine Blockierung der selbsttätigen Verstellbarkeit ist zum Beispiel mit Blockierbolzen 80 möglich, die zwischen dem sich jeweils bewegenden Teil und dem Fahrzeugrahmen 2 wirksam sind und in nicht dargestellte, geeignete Blockieröffnungen greifen. Ein hydraulischer oder elektrischer Stellantrieb 81 kann für jeden Blockierbolzen 80 vorgesehen sein.

Die Erfindung ist nicht auf die in den Figuren dargestellten Ausführungsbeispiele beschränkt, vielmehr sind auch noch Abwahdlungen möglich, ohne von dem grundsätzlichen Erfindungsgedanken abzuweichen. Dazu gehört auch die Gestaltung eines Fahrzeugs, das sowohl Räder mit Reifen als auch Kettenräder mit Raupen aufweist, wobei sowohl die Räder als auch die Raupen am Fahrzeugrahmen lenkbar und um quer zur Längsachse liegende Achsen schwenkbar angeordnet sind.

## Patentansprüche

1. Fahrzeug für landwirtschaftliche Zwecke und/oder für Bauzwecke, das mindestens je einen Fahrzeugrahmen (2), einen Antrieb (3) sowie ein Fahrwerk (4, 4a) umfasst, wobei das Fahrwerk (4, 4a) beidseitig sowie in Laufrichtung hintereinander je zwei Radgruppen (11, 11a) mit Radkästen (25) für je zwei hintereinander angeordnete, angetriebene Räder (12, 13) mit Reifen und/oder Kettenrädern (70a, 71a) mit Raupen/ Ketten (72a) umfasst, die lenkbar und als Radgruppen (11, 11 a) um die X-Achse (20)/Längsachse des Fahrzeuges (1, 1a) und um eine quer zur X-Achse (20)/Längsachse angeordnete Y-Achse (19)/Querachse schwenkbar sind,
**dadurch gekennzeichnet, dass**
a) jeweils zwei Räder (12, 13) einer jeden Radgruppe (11, 11') an zugleich Antriebseinheiten aufweisenden Radkästen (25) angeordnet sind und
b) dass jede Radgruppe (11, 11') mit ihren beiden Rädern (12, 13) und mit ihrem Radkasten (25) jeweils um eine eigene, vertikal stehende Z-Achse (21) verschwenkbar sind.

2. Fahrzeug nach Anspruch 1,
**dadurch gekennzeichnet, dass**
als Antriebseinheiten in den Radkästen (25) hydraulische Antriebe und/oder Elektromotoren vorgesehen sind.

3. Fahrzeug nach Anspruch 1 und 2,
**dadurch gekennzeichnet, dass**
die Radkästen (25) an Lagerbolzen (40) angeordnet sind und dass die Energieversorgung der Antriebseinheiten und entsprechende Rückleitungen durch die Lagerbolzen (40) in das Innere des Radkastens (25) erfolgt.

4. Fahrzeug nach mindestens einem der vorhergehenden Ansprüche,
**dadurch gekennzeichnet, dass**
die Lagerbolzen (40) rohrförmig sind.

5. Fahrzeug nach mindestens einem der vorhergehenden Ansprüche,
**dadurch gekennzeichnet, dass**
die Lagerbolzen (40) jeweils seitliche Durchtrittsöffnungen (46) und jeder Radkasten (25) mindestens eine Durchtrittsöffnung (47) für die Energieversorgung aufweisen.

6. Fahrzeug nach mindestens einem der vorhergehenden Ansprüche,
**dadurch gekennzeichnet, dass**
die einander gegenüberliegenden, die Y-Achse (19) bildenden Lagerbolzen (40) Teil eines einstückigen Trägers (30) in Form einer Pendelachse sind, wobei der einstückige Träger (30) ein Mittelstück (51) mit einer Bohrung (52) für die X-Achse (20) aufweist.

7. Fahrzeug nach mindestens einem der vorhergehenden Ansprüche,
**dadurch gekennzeichnet, dass**
jeder Radkasten (25) an einer Gabel (33) angeordnet ist und mit Hilfe der Gabel (33) um die Y-Achse (19) schwenkbar und um die senkrecht dazu stehende Z-Achse (21) zum Lenken des Fahrzeuges (1) bewegbar ist.

8. Fahrzeug nach mindestens einem der vorhergehenden Ansprüche,
**dadurch gekennzeichnet, dass**
der Radkasten (25) im Abstand vom freien Ende des Lagerbolzens (40) angeordnet ist.

9. Fahrzeug nach mindestens einem der vorhergehenden Ansprüche,
**dadurch gekennzeichnet, dass**
der Radkasten (25) an der Gabel (33) mit Hilfe von oberen und unteren Laschen angeordnet ist.

10. Fahrzeug nach mindestens einem der vorhergehenden Ansprüche,
**dadurch gekennzeichnet, dass**
die Z-Achse (21) zwischen dem freien Ende des Lagerbolzens (40) und dem Radkasten (25) angeordnet ist.

11. Fahrzeug nach mindestens einem der vorhergehenden Ansprüche,
**dadurch gekennzeichnet, dass**
eine hydraulische, aus Zylinder (23) und Kolben (24) bestehende Einrichtung (22) einerseits am Radkasten (25) und andererseits an der Gabel (33) zum Lenken der Räder (12, 13) angelenkt ist.

## Claims

1. A vehicle for agricultural purposes and/or construction purposes, comprising at least one vehicle frame (2), at least one drive (3) as well as at least one chassis (4, 4a), the chassis (4, 4a) comprising, on both sides and arranged one behind the other in the direction of motion, two sets of wheels (11, 11a) each, with wheel cases (25) for two driven wheels (12, 13), arranged one behind the other in each case, with tyres and/or chain wheels (70a, 71a) with tracks/chains (72a) which are steerable and are pivotable as sets of wheels (11, 11a) around a Y-axis (19)/cross axis arranged at right angles to the X-axis (20)/longitudinal axis,
**characterized in that**
a) two wheels (12, 13) of each set of wheels (11, 11') are arranged on wheel cases (25) which at the same time include drive units, and
b) that each set of wheels (11, 11') is pivotable with its two wheels (12, 13) and with its wheel case (25) around a separate vertical Z-axis (21).

2. The vehicle according to claim 1,
**characterized in that**
in the wheel cases (25), hydraulic drives and/or electric motors are provided as drive units.

3. The vehicle according to claims 1 and 2,
**characterized in that**
the wheel cases (25) are arranged on bearing bolts (40) and that the power supply of the drives and corresponding return lines is effected through the bearing bolts (40) into the interior of the wheel case (25).

4. The vehicle according to at least one of the preceding claims,
**characterized in that**
the bearing bolts (40) are tubular.

5. The vehicle according to at least one of the preceding claims,
**characterized in that**
each of the bearing bolts (40) is provided with lateral through holes (46) and each wheel case (25) is provided with at least one through hole (47) for the power supply.

6. The vehicle according to at least one of the preceding claims,
**characterized in that**
the bearing bolts (40) situated opposite each other and forming the Y-axis (19) are part of a one-piece carrier (30) in the form of a full floating axle, the one-piece carrier (30) including a central piece (51) with a drill-hole (52) for the X-axis (20).

7. The vehicle according to at least one of the preceding claims,
**characterized in that**
each wheel case (25) is arranged on a yoke (33) and is pivotable around the Y-axis (19) with the help of the yoke (33) and is movable around the Z-axis (21) which is normal to the Y-axis, for steering the vehicle (1).

8. The vehicle according to at least one of the preceding claims,
**characterized in that**
the wheel case (25) is arranged at a distance from the free end of the bearing bolt (40).

9. The vehicle according to at least one of the preceding claims,
**characterized in that**
the wheel case (25) is arranged on the yoke (33) with the help of upper and lower shackles.

10. The vehicle according to at least one of the preceding claims,
**characterized in that**
the Z-axis (21) is arranged between the free end of the bearing bolt (40) and the wheel case (25).

11. The vehicle according to at least one of the preceding claims,
**characterized in that**
a hydraulic device (22) consisting of a cylinder (23) and a piston (24) is articulated, on the one hand, on the wheel case (25) and, on the other hand, on the yoke (33), for steering the wheels (12, 13).

## Revendications

1. Véhicule pour des fins agricoles et/ou des fins de construction, comprenant au moins un cadre de véhicule (2), au moins une traction (3) ainsi qu'au moins un châssis (4, 4a), le châssis (4, 4a) comprenant, des deux côtés et ménagés l'un derrière l'autre dans le sens de la marche, deux ensembles de roues (11, 11 a) à chaque fois, avec des passages de roue (25) pour deux roues (12, 13) entraînées, ménagées l'une derrière l'autre à chaque fois, avec des pneus et/ou des roues à chaîne (70a, 71a) avec des chenilles/chaînes (72a) qui sont dirigeables et qui sont pivotables en tant qu'ensembles de roues (11, 11a) autour d'un axe des y (19)/axe transversal ménagé à angles droits à l'axe des x (20)/axe longitudinal,
**caractérisé en ce que**
a) deux roues (12, 13) de chaque ensemble de roues (11, 11') sont ménagés sur des passages de roue (25) qui, en même temps, comprennent des unités de traction, et
b) que chaque ensemble de roues (11, 11') est pivotable avec ses deux roues (12, 13) et avec son passage de roue (25) autour d'un axe des z vertical (21) séparé.

2. Véhicule selon la revendication 1,
**caractérisé en ce que**
des tractions hydrauliques et/ou des moteurs électriques sont prévus en tant qu'unités de traction dans les passages de roue (25).

3. Véhicule selon les revendications 1 et 2,
**caractérisé en ce que**
les passages de roue (25) sont ménagés sur des boulons de palier (40) et que l'alimentation en énergie des tractions et des conduites de retour correspondantes est effectuée au travers les boulons de palier (40) vers l'intérieur du passage de roue (25).

4. Véhicule selon au moins une des revendications précédentes,
**caractérisé en ce que**
les boulons de palier (40) sont tubulaires.

5. Véhicule selon au moins une des revendications précédentes,
**caractérisé en ce que**
chacun des boulons de palier (40) est muni de trous de passage (46) latéraux et chaque passage de roue (25) est muni d'au moins un trou de passage (47) pour l'alimentation en énergie.

6. Véhicule selon au moins une des revendications précédentes,
**caractérisé en ce que**
les boulons de palier (40), opposés l'un à l'autre et formant l'axe des y (19), font partie d'un support monobloc (30) sous forme d'un essieu oscillant, le support monobloc (30) comprenant une pièce centrale (51) avec une forure (52) pour l'axe des x (20).

7. Véhicule selon au moins une des revendications précédentes,
**caractérisé en ce que**
chaque passage de roue (25) est ménagé sur une fourche (33) et est pivotable autour de l'axe des y (19) au moyen de la fourche (33) et est mobile autour de l'axe des z (21) qui est perpendiculaire à l'axe des y, pour diriger le véhicule (1).

8. Véhicule selon au moins une des revendications précédentes,
**caractérisé en ce que**
le passage de roue (25) est ménagé à une distance du bout libre du boulon de palier (40).

9. Véhicule selon au moins une des revendications précédentes,
**caractérisé en ce que**
le passage de roue (25) est ménagé sur la fourche (33) au moyen d'éclisses supérieures et d'éclisses inférieures.

10. Véhicule selon au moins une des revendications précédentes,
**caractérisé en ce que**
l'axe des z (21) est ménagé entre le bout libre du boulon de palier (40) et le passage de roue (25).

11. Véhicule selon au moins une des revendications précédentes,
**caractérisé en ce**
**qu'**un dispositif hydraulique (22) se composant d'un cylindre (23) et d'un piston (24) est articulé, d'un côté, sur le passage de roue (25) et, de l'autre côté, sur la fourche (33), pour diriger les roues (12, 13).
